# EUROPÄISCHE PATENTSCHRIFT

(11) **EP 1 118 400 B1**
(45) Veröffentlichungstag und Bekanntmachung des Hinweises auf die Patenterteilung: **27.07.2005**
(21) Anmeldenummer: 01100641.8
(22) Anmeldetag: 11.01.2001
(51) Int. Cl.: B21D 22/00, B23K 26/00, B21C 51/00, G01B 11/00

(54) **Verfahren zur Ermittlung von Umform-Kenngrössen an Blechformteilen**
Method for applying deformation indicators on metal sheets
Procédé pour appliquer aux tôles des indicateurs de déformation

(30) Priorität: 22.01.2000 DE 10002684
(43) Veröffentlichungstag der Anmeldung: 25.07.2001
(73) Patentinhaber: Bayerische Motoren Werke Aktiengesellschaft, 80809 München (DE); A-Tec, 69198 Schriesheim (DE)
(72) Erfinder: Kopietz, Johannes, Dr., 81247 München (DE); Meinhardt, Josef, Dr., 80939 München (DE); Golle, Roland, Dr., 95701 Pechbrunn (DE); Voelkner, Wolfgang, Prof. Dr., 01239 Dresden (DE); Hoffmann, Hartmut, Prof. Dr., 74206 Bad Wimpfen (DE); Ahlers, R.-J., Dr., 69198 Schriesheim (DE)

(56) Entgegenhaltungen:
- EP-A- 0 338 816
- US-A- 4 288 852
- US-A- 4 969 106
- FUNKE P ET AL: "ERMITTLUNG VON FORMAENDERUNGEN AN TIEFGEZOGENEN BLECHTEILEN DURCH MESSRASTER" BAENDER BLECHE ROHRE, VOGEL, WUERZBURG, DE, Bd. 15, Nr. 6, 1974, Seiten 251-254, XP001034348 ISSN: 0005-3848

## Beschreibung

Die Erfindung bezieht sich auf ein Verfahren zur Ermittlung von Umform-Kenngrößen an Blechform-, insbesondere Tiefziehteilen oder Zugproben, nach dem Oberbegriff des Patentanspruchs 1.

Aus "Funke et al: Ermittlung von Formänderungen", Bänder, Bleche, Rohre, Bd. 15, Nr.6, 1974, Vogel Verlag, DE, ist es bekannt, Blechformteile im unverformten Zustand mit lasergravierten, zumeist kreisförmigen Oberflächenmarkierungen zu versehen und die Formänderungen der so umgrenzten Flächenstücke, also etwa die elliptische Verformung von Kreisflächen, nach der Blechumfor mung zu vermessen und daraus die Umform-Kenngrößen des Blechmaterials zu ermitteln. Hierdurch lässt sich das Umformverhalten von Blechformteilen jedoch nur bis hinunter in den mm-Bereich erfassen. Lokale Formänderungsinhomogenitäten unterhalb dieser Grenze aber sind mit derartigen Rastermethoden nicht erfassbar.

Femer ist in der EP 0 338 816 A ein Ätzverfahren für eine Prägerolle beschrieben, bei welchem eine Kunststoffschicht auf der Oberfläche der Prägerolle mittels eines Laserstrahls in einem rasterförmigen Muster mikrofein perforiert wird.

Aufgabe der Erfindung ist es, ein Verfahren der eingangs genannten Art anzugeben, durch das auf einfache und exakte Weise lokale Umform-Kenngrößen im Mikrobereich an Blechformteilen zu ermitteln sind.

Diese Aufgabe wird erfindungsgemäß durch das im Patentanspruch 1 gekennzeichnete Verfahren gelöst. Mit dem erfindungsgemäßen Verfahren ist es aufgrund der besonderen Gestaltung der Oberflächenmarkierung als durch die Mitte der Markierungslinien oder -punkte determiniertes Rastergitter mit einem Rastermaß im 100 µm-Bereich in Verbindung mit der messtechnischen Bestimmung der durch die Blechverformung erzeugten, lokalen Rastermaßverzerrungen gelungen, die finiten Umform-Kenngrößen von Blechformteilen im Mikrobereich selbst bei einem diffusen Randverlauf der Oberflächenmarkierungen mit hoher Genauigkeit zu ermitteln. Hierdurch lässt sich vor allem für kritische Formbereiche auf einfache Weise eine sichere, detaillierte Aussage über das Umformverhalten, etwa den Formänderungszustand an Bördelkanten, gewinnen.

Aus Gründen einer herstellungsgünstigen Gestaltung wird die Oberflächenmarkierung nach Anspruch 2 vorzugsweise als punktförmiges oder aus sich kreuzenden, geraden Linien bestehendes Rastergitter ausgebildet.

Um eine umformbeständige Markierung geringer Strichstärke auf fertigungstechnisch einfache Weise zu erhalten, wird die Blechoberfläche nach Anspruch 3 vorzugsweise laserberastert.

Im Hinblick auf eine hohe Messgenauigkeit empfiehlt es sich, das Rastergitter gemäß Anspruch 4 nach der Blechverformung auf laseroptischem Wege zu vermessen, wodurch sich eine Auflösung von etwa 1 µm erhalten lässt.

Weitere Merkmale der Erfindung ergeben sich aus der nachfolgenden, beispielsweisen Beschreibung in Verbindung mit den Zeichnungen. Diese zeigen in stark schematisierter Darstellung:
- **Fig. 1**: einen Ausschnitt einer gitterförmig markierten Blechoberfläche vor der Verformung;
- **Fig. 2**: das der Oberflächenmarkierung nach Fig. 1 entsprechende Rastergitter;
- **Fig. 3**: einen der Fig. 1 entsprechenden Ausschnitt einer Blechoberfläche nach der Verformung; und
- **Fig. 4**: das sich durch Vermessung der Oberflächenmarkierung nach Fig. 3 ergebende, verzerrte Rastergitter.

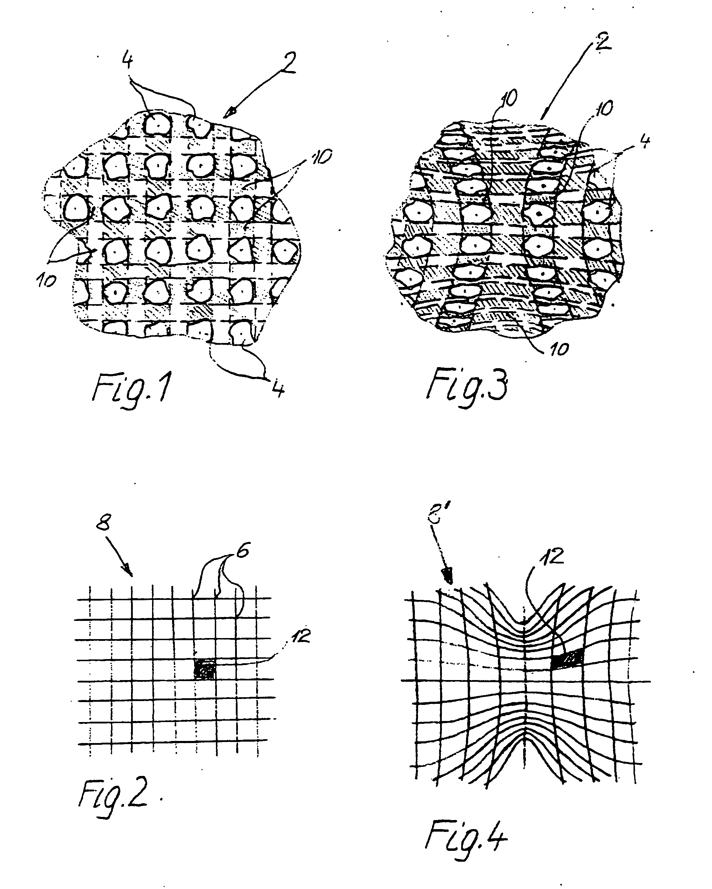

Das in Fig. 1 im unverformten Zustand ausschnittsweise gezeigte Blechteil 2 ist an der Oberfläche mit punktförmigen Markierungen 4 versehen, die an den Kreuzungsstellen 6 eines virtuellen Rastergitters 8 (Fig. 2), dessen Rastermaß z.B. 125 µm beträgt, im Wege einer Lasergravur auf die Blechoberfläche aufgebracht werden. Die dabei entstehenden Markierungspunkte 4 besitzen eine kraterförmige Kontur mit einem mittleren Durchmesser von z.B. 80 µm. Anstelle von isolierten Markierungspunkten 4 können in die Blechoberfläche auch sich kreuzende - in Fig. 1 schraffiert dargestellte - Markierungslinien 10 lasergraviert werden, die entsprechend dem Rastergitter 8 mit einem Mittenabstand von 125 µm parallel zueinander verlaufen und eine wiederum herstellungsbedingt unregelmäßige Randkontur sowie - je nach gewählter Laserintensität - eine Linienbreite zwischen 1 und 5 µm aufweisen.

Bei einer Verformung des so markierten Blechteils 2 werden die Oberflächenmarkierungen 4 bzw. 10 in entsprechender Weise mitverformt, wie dies in den Fig. 3 und 4 anhand des zugverformten Blechteils 2 dargestellt ist. Durch eine laseroptische Abstandsmessung, die eine Auflösung von etwa 1 um gestattet, werden die Markierungspunkte 4 bzw. -linien 10 auf dem verformten Blechteil 2 vermessen und anschließend aus den Messergebnissen die Mittenposition der einzelnen Markierungselemente 4 bzw. 10 bestimmt, so dass sich das in Fig. 4 gezeigte, verformte Rastergitter 8' ergibt. Aufgrund der geometrischen Verzerrungen der einzelnen, ursprünglich quadratischen Mikrobereiche 12, also der lokalen Änderungen des Rastermaßes, lassen sich die finiten Umform-Kenngrößen des Blechteils 2, wie die beiden Hauptformänderungen in der berasterten Fläche und die dritte Hauptformänderung senkrecht dazu sowie die Vergleichsformänderung im Mikrometerbereich mit hoher Genauigkeit ermitteln.

## Patentansprüche

1. Verfahren zur Ermittlung von Umform-Kenngrößen an Blechform-, insbesondere Tiefziehteilen oder Zugproben, bei dem die Blechoberfläche vor dem Verformen mit einer Oberflächenmarkierung versehen, die Oberflächenmarkierung nach der Blechverformung vermessen und aus den geometrischen Verzerrungen der Oberflächenmarkierung die Umform-Kenngrößen des Blechteils ermittelt werden, **dadurch gekennzeichnet, dass**
als Oberflächenmarkierung ein Rastergitter (8) mit einem Rastermaß zwischen 50 und einigen Hundert µm gewählt wird und nach der Blechverformung die geometrischen Veränderungen des Rastermaßes im Mikrobereich (12) gemessen und hieraus die finiten Umform-Kenngrößen des Blechteils (2) ermittelt werden.

2. Verfahren nach Anspruch 1, **dadurch gekennzeichnet, dass**
als Oberflächenmarkierung ein punktförmiges oder aus sich kreuzenden Linien bestehendes Rastergitter (8) gewählt wird.

3. Verfahren nach Anspruch 1 oder 2, **dadurch gekennzeichnet, dass** die Blechoberfläche laserberastert wird.

4. Verfahren nach einem der vorhergehenden Ansprüche, **dadurch gekennzeichnet, dass**
die Oberflächenmarkierung (4; 10) nach der Blechverformung auf laseroptischem Wege vermessen wird.

## Claims

1. A method of determining forming characteristics of metal sheets, especially deep-drawn parts or tensile testpieces, wherein the sheet surface is marked before forming, the surface markings are measured after forming and the forming characteristics of the sheet are calculated from the geometrical distortions of the surface markings, **characterised in that**
the chosen surface marking is a grid (8) with a grid element size between 50 and a few hundred µm, and after forming the geometrical changes in the grid size are measured in the micro region (12) and the finite forming characteristics of the sheet-metal part (2) are obtained therefrom.

2. A method according to claim 1, **characterised in that** the chosen surface marking is a grid (8) of points or of intersecting lines.

3. A method according to claim 1 or 2, **characterised in that** a grid is formed on the sheet-metal surface by a laser.

4. A method according to any of the preceding claims, **characterised in that** the surface marking (4; 10) is optically measured by laser after the sheet metal has been formed.

## Revendications

1. Procédé pour déterminer des caractéristiques de déformation sur des pièces de tôle façonnées, notamment embouties, ou sur des éprouvettes de traction, dans lequel on munit la surface de la tôle d'un marquage superficiel avant la déformation, on relève le marquage superficiel après la déformation de la tôle et, sur la base des distorsions géométriques du marquage superficiel, on détermine les caractéristiques de déformation de la pièce de tôle,
**caractérisé en ce qu'**
on choisit comme marquage superficiel un quadrillage (8) ayant une largeur de maille comprise entre 50 µm et quelques centaines de µm et, après la déformation de la tôle, on mesure les modifications géométriques de la largeur de maille à l'échelle du micron (12) et on détermine les caractéristiques de déformation finies de la pièce de tôle (2) sur cette base.

2. Procédé selon la revendication 1,
**caractérisé en ce qu'**
on choisit comme marquage superficiel un quadrillage (8) ponctuel ou composé de lignes qui se croisent.

3. Procédé selon la revendication 1 ou 2,
**caractérisé en ce que**
la surface de la tôle est quadrillée au laser.

4. Procédé selon une des revendications précédentes,
**caractérisé en ce qu'**
après la déformation de la tôle, le marquage superficiel (4 ; 10) est relevé par voie optique au laser.
